# EUROPÄISCHE PATENTANMELDUNG

(11) **EP 1 375 827 A1**
(43) Veröffentlichungstag der Anmeldung: **02.01.2004**
(21) Anmeldenummer: 02014453.1
(22) Anmeldetag: 28.06.2002
(51) Int. Cl.: F01K 25/00

(54) **Dampfkraftwerk**

(71) Anmelder: SIEMENS AKTIENGESELLSCHAFT, 80333 München (DE)
(72) Erfinder: Die Erfindernennung liegt noch nicht vor

(57) **Zusammenfassung**

Ein erfindungsgemäßes Dampfkraftwerk (1) umfasst mindestens eine Dampfturbine (3) und einen Dampferzeuger (5), wobei eine Befeuerungseinrichtung (7) in Richtung (9) des Dampfstroms (17) nach dem Dampferzeuger (5) und vor der Dampfturbine (3) und/oder nach einer ersten Turbinenstufe (11) und vor einer zweiten Turbinenstufe (13) der Dampfturbine (3) angeordnet ist und der Dampfstrom (9) in einer Brennkammer (19) der Befeuerungseinrichtung (7) mittels Vermischung mit einem in der Brennkammer (19) erzeugbaren Heißgas beheizbar ist.

## Beschreibung

Die Erfindung betrifft ein Dampfkraftwerk mit mindestens einer Dampfturbine und einem Dampferzeuger.

Bei bekannten Dampfkraftwerken wird Betriebsdampf für eine Dampfturbine meist in einem Dampferzeuger erzeugt, wobei die in einem Heißgas enthaltene Energie an einen oder mehrere Wärmetauscher abgegeben wird, welche mit Wasser bespeist sind, so dass durch Aufheizung dieses Wassers Betriebsdampf erzeugbar ist, oder welche mit Dampf bespeist sind, so dass mittels eines letztgenannten Wärmetauschers eine Überhitzung des Dampfes erzielbar ist; eine derartige Überhitzung findet bei bekannten Dampfturbinen beispielsweise zwischen einer Hochdruckstufe und einer Mitteldruckstufe der Dampfturbine statt, wobei der die Hochdruckstufe verlassende Dampf mittels einer im Dampferzeuger angeordneten Zwischenüberhitzerheizfläche überhitzt und der Mitteldruckstufe zugeführt wird.

Derartige Zwischenüberhitzungen des Dampfes tragen beispielsweise zu einem höheren Wirkungsgrad der Dampfturbine bei.

Bei bekannten Dampfkraftwerken erfolgt die Zufuhr von Wärmeenergie zur Erzeugung und/oder Zwischenüberhitzung von Dampf mittels Wärmetauscherflächen, welche im Dampferzeuger angeordnet sind und mit einem im Dampferzeuger geführten Heißgas in Berührung kommen. Die erhitzten Wärmetauscherflächen geben wiederum ihre Wärmeenergie an Wasser und/oder Dampf ab, welche innerhalb des von einer Wärmetauscherfläche gebildeten Körpers geführt sind. Die Erhitzung erfolgt also mittels einer Wärmeübertragung vom Heißgas an die Wärmetauscherfläche und von der Wärmetauscherfläche an das aufzuheizende Medium.

Da bei den aus dem Stand der Technik bekannten Wärmetauschern, welche in Dampferzeugern bekannter Dampfkraftanlagen eingesetzt sind, die Energie eines Heißgases an das aufzuheizende Medium mittels eines durch das Heißgas aufgeheizten Werkstoffs der Wärmetauscherfläche übertragen wird, ist die Menge an Energie, welche an das aufzuheizende Medium, beispielsweise Wasser und/oder Dampf übertragen werden kann, begrenzt durch die Werkstoffeigenschaften der Wärmetauscherfläche.

Daher sind bei bekannten Dampfkraftanlagen die zulässigen Dampftemperaturen begrenzt, da die die Wärmeenergie übertragende Wärmetauscherfläche aufgrund ihrer Werkstoffeigenschaften und damit im Zusammenhang stehenden thermischen Belastungsgrenzen nicht beliebig hoch aufheizbar ist.

Des Weiteren ist die Wärmeübertragung von Heißgas an das aufzuheizende Medium mit einer Verzögerung behaftet, verursacht im Wesentlichen durch die benötigte Aufheizzeit der Wärmetauscherfläche.

Der Erfindung liegt daher die Aufgabe zugrunde, ein Dampfkraftwerk mit mindestens einer Dampfturbine und einen Dampferzeuger anzugeben, welches flexibel einsetzbar ist und insbesondere genannte Nachteile aus dem Stand der Technik überwindet.

Die Aufgabe wird erfindungsgemäß gelöst durch ein Dampfkraftwerk, umfassend mindestens eine Dampfturbine und einen Dampferzeuger, bei welchem eine Befeuerungseinrichtung in Richtung des Dampfstroms nach dem Dampferzeuger und vor der Dampfturbine und/oder nach einer ersten Turbinenstufe und vor einer zweiten Turbinenstufe der Dampfturbine angeordnet ist und der Dampfstrom in einer Brennkammer der Befeuerungseinrichtung mittels Vermischung mit einem in der Brennkammer erzeugbaren Heißgas beheizbar ist.

Die Erfindung geht dabei von der Überlegung aus, dass die Wärmeübertragung von einem Heißgas an ein aufzuheizendes Medium im Vergleich zum Stand der Technik weniger beschränkt ist, wenn die Energieübertragung auf das aufzuheizende Medium auf die Verwendung einer Wärmetauscherfläche verzichtet.

Dies wird bei der Erfindung dadurch erreicht, dass der aufzuheizende Dampfstrom unmittelbar in eine Brennkammer eingeleitet wird und sich dort direkt mit dem Heißgas vermischt.

Diese erfindungsgemäße interne Zusatzfeuerung kann in Dampfstromrichtung nach dem Dampferzeuger und vor der Dampfturbine, also bereits zur Überhitzung von Frischdampf, oder auch zur Überhitzung von Dampf verwendet werden, welcher bereits einen Teil seiner Energie in einer Turbinenstufe abgegeben und nach einer erfindungsgemäßen Überhitzung einer weiteren Turbinenstufe zugeführt wird.

Mittels eines erfindungsgemäßen Dampfkraftwerks sind im Vergleich zum Stand der Technik höhere Dampftemperaturen erzielbar, welche zu einem höheren Wirkungsgrad des Dampfkraftwerks beitragen können.

Vorteilhaft ist der Befeuerungseinrichtung Wasserstoff und/oder ein Kohlenwasserstoff, insbesondere Methan, als Brennstoff zuführbar.

Die Verwendung von Wasserstoff als Brennstoff bietet vor allem den Vorteil, dass - falls der Wasserstoff wie vielfach üblich durch Reformierung oder Vergasung aus einem Kohlenwasserstoff hergestellt ist - anfallendes Kohlendioxid bereits während der Herstellung des Wasserstoffs bei der Reformierung oder Vergasung eines Kohlenwasserstoffs mit vergleichsweise geringem Energieaufwand zurückgehalten werden kann und so die Bildung eines sauren Dampfgemisches innerhalb der Dampfturbine und/oder anderen Komponenten des Dampfkraftwerks von vornherein vermieden ist.

Um eine besonders gute Befeuerung der Brennkammer zu erreichen, ist der Befeuerungseinrichtung vorteilhaft ein sauerstoffhaltiges Gas, insbesondere reiner Sauerstoff und/oder Luft zur Erzeugung einer Verbrennungsatmosphäre zuführbar.

Diese Ausführungsform der Erfindung trägt dem Erfordernis Rechnung, dass eine Verbrennung eines Brennstoffs nur in einer geeigneten Verbrennungsatmosphäre möglich ist. Eine besonders effiziente Verbrennung ist mittels der Zuführung reinen Sauerstoffs möglich, da dieser im Vergleich zu Luft keine weiteren, für die Verbrennung eher hinderlichen Bestandteile enthält, die u.U. vor der Verbrennung beispielsweise in einer Luftzerlegungseinrichtung abgetrennt werden müssten, um eine geeignete Verbrennungsatmosphäre zu schaffen.

In einer weiteren bevorzugten Ausführungsform der Erfindung sind anfallende Verbrennungsprodukte dem Dampfstrom mittels eines der Dampfturbine nachgeschalteten Kondensators entnehmbar.

Bei praktisch allen Verbrennungsprozessen entstehen Verbrennungsprodukte, welche meist abzuführen sind, da sie sich, insbesondere nach einer längeren Betriebszeit, in der Brennkammer oder sonstigen Komponenten ablagern können und deren Funktion einschränken.

Wird bei einem erfindungsgemäßen Dampfkraftwerk beispielsweise Kohlenwasserstoff als Brennstoff in einer Atmosphäre aus reinem Sauerstoff verbrannt, so entstehen zumindest die Verbrennungsprodukte Wasser und Kohlendioxid. Diese Verbrennungsprodukte werden vom Dampfstrom mitgeführt und dem Kondensator zugeleitet. Bei bekannten Dampfkraftwerken ist ein Kondensator meist ohnehin vorhanden, so dass im Zusammenhang mit der Erfindung nicht unbedingt ein zur Entnahme der Verbrennungsprodukte geeigneter, separater Kondensator vorgesehen werden muss.

Bei der Abkühlung des Dampfes, welcher die Verbrennungsprodukte als Wasser-Kohlendioxid-Gemisch enthält, kondensiert der Wasseranteil weitgehend und es bleibt nahezu reines, gasförmiges Kohlendioxid übrig, welches dem Kondensator entnommen und beispielsweise gelagert werden kann.

Wie bereits erwähnt, kann bei der Verwendung von Wasserstoff als Brennstoff, welcher mittels einer Reformierung oder Vergasung eines Kohlenwasserstoffs hergestellt ist, anfallendes Kohlendioxid bereits vor der Einleitung des Brennstoffs in die Befeuerungseinrichtung entnommen werden, so dass in diesem Fall bei der Verbrennung praktisch kein Kohlendioxid als Verbrennungsprodukt entsteht.

Die mittels der Befeuerungseinrichtung eines erfindungsgemäßen Dampfkraftwerks realisierte interne Zusatzfeuerung kann während des Betriebs der Dampfturbine sehr schnell zur Verfügung gestellt werden. Dazu ist lediglich das Entzünden von in die Brennkammer eingeleiteten Brennstoff nötig; es entfallen insbesondere die Aufheizzeiten von bekannten Wärmetauscherflächen.

Des Weiteren bietet ein erfindungsgemäßes Dampfkraftwerk den Vorteil, dass Verbrennungsprodukte und/oder Abgas nicht unbedingt aus der Brennkammer mittels einer separaten Austragseinrichtung abgeführt werden müssen, da sie vom Dampfstrom mitgeführt und an anderer Stelle des Dampfkreislaufs, beispielsweise dem genannten Kondensator, ausgekoppelt werden können. Außerdem ist durch die Erfindung eine höhere Dampftemperatur erzielbar, ohne die Auslegung des Dampferzeugers ändern zu müssen.

Ein erfindungsgemäßes Dampfkraftwerk kann insbesondere auch zur Bereitstellung von Energie in Spitzenlastzeiten oder zur Stützung der Netzfrequenz eines elektrischen Energieversorgungsnetzes eingesetzt werden; ein erfindungsgemäßes Dampfkraftwerk bietet die Möglichkeit einer schnellen Leistungsregelung und ist sehr flexibel einsetzbar.

Im Folgenden wird ein Ausführungsbeispiel der Erfindung näher dargestellt.

Es zeigt:
- FIG: ein erfindungsgemäßes Dampfkraftwerk.

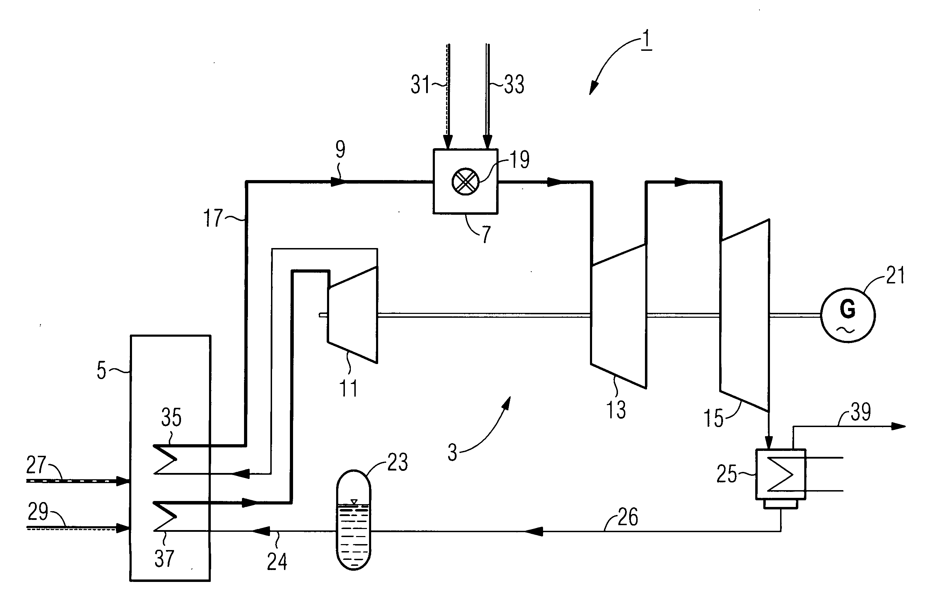

In der Figur ist ein erfindungsgemäßes Dampfkraftwerk 1 dargestellt, welches eine mit einem Generator 21 gekoppelte Dampfturbine 3, sowie einen Dampferzeuger 5 umfasst.

Die Dampfturbine 3 ist dreistufig aufgebaut und weist eine erste Turbinenstufe 11, eine zweite Turbinenstufe 13 und eine dritte Turbinenstufe 15 auf, welche als Hochdruckstufe, Mitteldruckstufe bzw. Niederdruckstufe ausgebildet sind.

Beim Dampferzeuger 5 handelt es sich im vorliegenden Ausführungsbeispiel der Figur und einen mittels Kohle 27 befeuerten Kessel, welchem zum Unterhalten der Kohlefeuerung Verbrennungsluft 29 zugeführt ist.

Im Dampferzeuger 5 ist im Bereich dessen heißem Ende eine Heizfläche 37 sowie in einem Bereich niedrigerer Temperatur eine Zwischenüberhitzerheizfläche 35 angeordnet.

Die Heizfläche 37 dient dazu, Speisewasser 24 aus einem Speisewasserbehälter 23 im Dampferzeuger 5 derart zu erhitzen, dass der ersten Turbinenstufe 11 Betriebsdampf zuführbar ist.

Nach Teilentspannung in der ersten Turbinenstufe 11 wird der Dampf mittels der Zwischenüberhitzerheizfläche 35 zwischenüberhitzt. Ein Dampfstrom 17 tritt in Richtung 9 aus der Zwischenüberhitzerheizfläche 35 aus und wird einer Befeuerungseinrichtung 7 zugeleitet. Dabei wird der Dampfstrom 17 in einer Brennkammer 19 mittels eines Brennstoffs 33 und Zugabe von Sauerstoff 31 aufgeheizt, wobei sich der Dampfstrom 17 in der Brennkammer 19 mit dem Heißgas vermischt, welches in der Brennkammer 19 bei der Verbrennung des Brennstoffs 33 entsteht.

Die Wärmeübertragung vom Heißgas auf den Dampfstrom 17 erfolgt also direkt durch Vermischung, ohne dass zur Wärmeübertragung ein Werkstoff, beispielsweise eine Wärmetauscherfläche, vorgesehen ist.

Anstelle von Sauerstoff 31 ist auch die Verwendung von Luft zur Erzeugung einer geeigneten Verbrennungsatmosphäre möglich, wobei die Luft ggf. vor Einleitung in die Brennkammer mittels einer Luftzerlegungseinrichtung in Sauerstoff und Restgas aufgespaltet wird.

Als Brennstoff 33 kann beispielsweise ein Kohlenwasserstoff, insbesondere Methan, oder Wasserstoff verwendet werden.

Der mittels der Befeuerungseinrichtung 7 aufgeheizte Dampfstrom 17 wird der zweiten Turbinenstufe 13 zugeführt, wo er zumindest einen Teil seiner in ihm enthaltenen Energie in mechanische Arbeit wandelt. Der so weiter entspannte Dampf verlässt die zweite Turbinenstufe 13 und wird der dritten Turbinenstufe 15 zugeleitet, wo die im Dampf noch vorhandene Energie möglichst gut in mechanische Energie umgewandelt wird.

Der entspannte Dampf verlässt als Wasser-Dampf-Gemisch die dritte Turbinenstufe 15 und wird einem Kondensator 25 zugeleitet, wo der noch vorhandene Dampfanteil zu Wasser kondensiert wird.

Dieses, sich im Kondensator 25 ansammelnde Wasser wird als Kondensat 26 dem Speisewasserbehälter 23 zugeführt.

Dem Kondensator 25 können Verbrennungsprodukte 39 entnommen werden, welche bei der Verbrennung in der Brennkammer 19 der Befeuerungseinrichtung 7 entstehen.

Da sich in der Brennkammer 19 die Verbrennung innerhalb des Dampfstroms 17 abspielt, werden die Verbrennungsprodukte 39 vom Dampfstrom 17 im Dampfkreislauf mitgeführt und nach dieser Ausführungsform der Erfindung dem Kondensator 25 entnommen.

Wird als Brennstoff 33 beispielsweise ein Kohlenwasserstoff mit Sauerstoff 31 verbrannt, so umfassen die Verbrennungsprodukte 39 Wasser und Kohlendioxid. Dieses Wasser-Kohlendioxid-Gemisch wird vom Dampfstrom 17 mitgeführt und kann dem Kondensator 25 entnommen werden, da bei der Abkühlung des Wasser-Kohlendioxid-Gemischs der Wasseranteil weitgehend kondensiert und nahezu reines gasförmiges Kohlendioxid als Gas verbleibt, welches anschließend abtransportiert und beispielsweise gelagert werden kann.

Wasser als Verbrennungsprodukt muss selbstverständlich üblicherweise nicht abgeführt werden, sondern kann als Bestandteil des Kondensats 26 dem Speisewasserbehälter 23 zugeführt werden.

## Patentansprüche

1. Dampfkraftwerk (1), umfassend mindestens eine Dampfturbine (3) und einen Dampferzeuger (5),
**dadurch gekennzeichnet, dass**
eine Befeuerungseinrichtung (7) in Richtung (9) des Dampfstroms (17) nach dem Dampferzeuger (5) und vor der Dampfturbine (3) und/oder nach einer ersten Turbinenstufe (11) und vor einer zweiten Turbinenstufe (13) der Dampfturbine (3) angeordnet ist und der Dampfstrom (17) in einer Brennkammer (19)der Befeuerungseinrichtung (7) mittels Vermischung mit einem in der Brennkammer (19) erzeugbaren Heißgas beheizbar ist.

2. Dampfkraftwerk (1) nach Anspruch 1,
**dadurch gekennzeichnet, dass**
der Befeuerungseinrichtung (7) Wasserstoff und/oder ein Kohlenwasserstoff, insbesondere Methan, als Brennstoff (33) zuführbar ist.

3. Dampfkraftwerk (1) nach einem der Ansprüche 1 oder 2,
**dadurch gekennzeichnet, dass**
der Befeuerungseinrichtung (7) zur Erzeugung einer Verbrennungsatmosphäre in der Brennkammer (19) ein sauerstoffhaltiges Gas, insbesondere reiner Sauerstoff (31) und/oder Luft, zuführbar ist.

4. Dampfkraftwerk (1) nach einem der Ansprüche 1 bis 3,
**dadurch gekennzeichnet, dass**
anfallende Verbrennungsprodukte (39) dem Dampfstrom (9) mittels eines der Dampfturbine (3) nachgeschalteten Kondensators (25) entnehmbar sind.
